# FASCICULE DE BREVET EUROPEEN

(11) **EP 0 664 868 B1**
(45) Date de publication et mention de la délivrance du brevet: **20.03.1996**
(21) Numéro de dépôt: 93921999.4
(22) Date de dépôt: 06.10.1993
(51) Int. Cl.: F16L 58/10

(54) **FEUILLE DE PROTECTION POUR ELEMENT DE CANALISATION, ET ELEMENT DE CANALISATION REVETU CORRESPONDANT**
SCHUTZFOLIE FÜR EIN ROHRELEMENT UND AUSGEKLEIDETES ROHRELEMENT DAFÜR
PROTECTIVE SHEET FOR PIPE ELEMENT AND CORRESPONDING PIPE ELEMENT COMPRISING A PROTECTIVE LAYER

(30) Priorité: 13.10.1992 FR 9212239
(43) Date de publication de la demande: 02.08.1995
(73) Titulaire: PONT-A-MOUSSON S.A., F-54000 Nancy (FR)
(72) Inventeur: EDWARDS, Richard John, Nottingham NG10 5AA (GB)
(74) Mandataire: Puit, Thierry
(86) Numéro de dépôt international: FR9300985
(87) Numéro de publication internationale: WO9409306

(56) Documents cités:
- EP-A- 0 421 607
- EP-A- 0 465 150
- FR-A- 1 478 245
- GB-A- 912 999
- GB-A- 1 052 885

## Description

La présente invention est relative à une feuille de protection en matière plastique pour élément de canalisation.

Il est connu d'envelopper les éléments de canalisation métalliques destinés à être enterrés dans un revêtement anti-corrosion réalisé par enroulement et collage à partir d'une feuille de protection en matière plastique.

Un tel revêtement doit posséder des propriétés mécaniques qui lui permettent de résister aux actions mécaniques sévères qu'il doit subir lors du transport et de la mise en place en tranchée des éléments de canalisation : raclage sur le bord arrière du plateau du camion de transport, raclage contre les parois et le fond de la tranchée, chocs multiples de pierres lors du remblaiement de celles-ci. Par exemple, EP-A-0 465 150 décrit une feuille destinée à être enroulée sur un tuyau et qui est formée de trois couches successives, A/B/A, ayant la composition suivante: A est à base de 96% d'éthylène vinyl acetate et B est un mélange à base de polyéthylène haute densité et de polyéthylène basse densité. Cette feuille est enroulée autour du tuyau sur lequel a déjà été enroulée une première feuille, ce qui conduit à une structure totale complexe.

L'invention a pour but de fournir une feuille de protection possédant, malgré un faible coût, des propriétés mécaniques satisfaisantes au sens indiqué ci-dessus.

A cet effet, l'invention a pour objet une feuille de protection en matière plastique pour élément de canalisation comprenant :
- un film extérieur en polyéthylène haute densité;
- un film intermédiaire en polyéthylène tissé ou en polypropylène tissé; et
- un film intérieur en polyéthylène haute densité;
- les films extérieur et intérieur étant collés sur le film intermédiaire.

Suivant d'autres caractéristiques :
- le film intermédiaire est en polyéthylène haute densité tissé;
- les films extérieur et intérieur sont collés sur le film intermédiaire au moyen d'un film d'adhésif, notamment en polyéthylène basse densité;
- le film d'adhésif reliant le film extérieur au film intermédiaire est moins épais que l'autre film d'adhésif;
- chaque film d'adhésif a une épaisseur comprise entre 5 et 20 µm;
- le film extérieur est plus épais que le film intérieur;
- les films extérieur et intérieur ont une épaisseur comprise entre 50 et 200 µm;
- le film intermédiaire a une épaisseur comprise entre 50 et 150 µm;
- le film extérieur est en polyéthylène haute densité d'environ 125 µm d'épaisseur, le film intermédiaire est en polyéthylène haute densité tissé d'environ 100 µm d'épaisseur, le film intérieur est en polyéthylène haute densité d'environ 75 µm d'épaisseur, le film extérieur est collé sur le film intermédiaire par un film d'adhésif utilisé dans une quantité d'environ 15 g/m, et le film intérieur est collé au film intermédiaire par un film d'adhésif utilisé dans une quantité d'environ 20 g/m.

L'invention a également pour objet un élément de canalisation portant sur au moins une partie de sa longueur un revêtement extérieur de protection constitué à partir d'une feuille de protection telle que définie ci-dessus.

Ce revêtement peut notamment être réalisé par enroulement successif de bandes dont les bords sont perpendiculaires à l'axe de l'élément de canalisation, avec une zone de recouvrement d'une bande à la suivante.

Dans ce cas, chaque bande peut être mise en place par collage de son bord avant sur une génératrice de l'élément de canalisation, enroulement sur un peu plus d'un tour et collage de son bord arrière sur une génératrice de l'élément de canalisation.

Des exemples de réalisation de l'invention vont maintenant être décrits en regard du dessin annexé, sur lequel :
- la Figure 1 est une vue schématique en coupe d'une feuille de protection conforme à l'invention; et
- la Figure 2 est une vue schématique en élévation d'un élément de canalisation portant un revêtement extérieur de protection réalisé à partir d'une telle feuille.

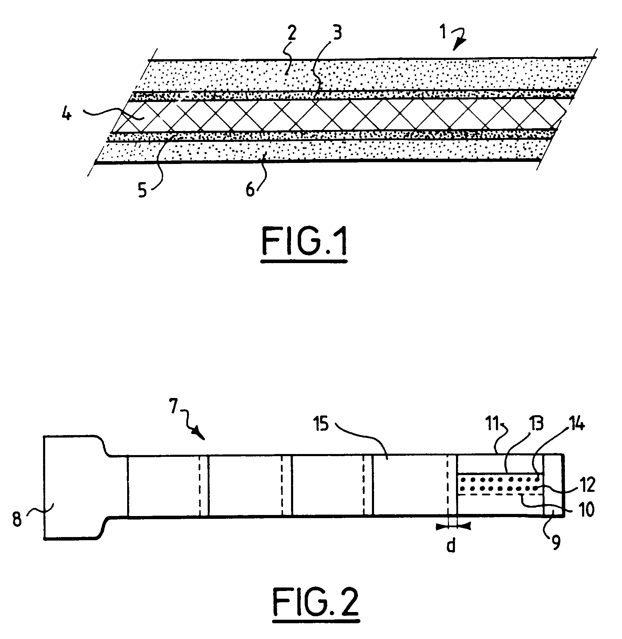

La feuille de protection 1 représentée à la Figure 1 est constituée des cinq couches successives suivantes, disposées de haut en bas sur cette figure :
- un film extérieur 2 en polyéthylène haute densité (PEHD) ayant une épaisseur nominale de 125 µm;
- un film d'adhésif extérieur 3 en polyéthylène basse densité (PEBD), utilisé dans une quantité nominale de 15 g/m;
- un film intermédiaire 4 en PEHD tissé, ayant une masse spécifique nominale de 100 g/m, ce qui correspond à une épaisseur nominale d'environ 100 µm;
- un film d'adhésif intérieur 5 en PEBD, utilisé dans une quantité nominale de 20 g/m; et
- un film intérieur 6 en PEHD, ayant une épaisseur nominale de 75 µm.

Les films sont collés les uns aux autres par chauffage/compression.

Le film tissé 4 assure l'essentiel de la résistance au déchirement et à la propagation des éventuelles entailles, tandis que les films extérieur 2 et intérieur 6 confèrent à la feuille 1 son imperméabilité à l'eau tout en évitant le contact avec le sol du tuyau revêtu.

Le film extérieur 2 assure la résistance principale au raclage et à l'abrasion, et c'est pourquoi il est de préférence plus épais que le film intérieur 6.

De plus, comme l'adhésif extérieur 3 est utilisé en quantité moindre que l'adhésif intérieur 5, le film extérieur adhère moins fortement au film tissé 4 que le film intérieur 6. Ceci permet de faire du film extérieur une couche "sacrifiée" qui, lorsqu'elle est endommagée par râclage/abrasion, peut se détacher du reste de la feuille en laissant pratiquement intacts les films 4 et 6.

Dans un autre mode de réalisation de la feuille de protection 1, les films extérieur 2 et intérieur 6 ont la même épaisseur nominale de 100 µm, et le film intermédiaire 4 est constitué d'un tissé de polyéthylène haute densité ayant une masse spécifique d'environ 100 g/m.

La Figure 2 représente un tuyau 7 à emboîtement 8 équipé d'un revêtement extérieur de protection réalisé à partir d'une feuille de protection telle que décrite ci-dessus. Ce revêtement s'étend sur toute la longueur du tuyau, à l'exception de son emboîtement 8 et de la zone d'extrémité cylindrique opposée 9, destinée à pénétrer dans l'emboîtement d'un tuyau analogue avec interposition d'une garniture d'étanchéité.

Dans toute la zone revêtue, on enroule plusieurs bandes de la feuille 1, de la manière suivante : le bord avant 10 d'une première bande 11 est collé par un cordon d'adhésif à chaud sensible à la pression ("pressure-sensitive hot melt adhesive") 12 le long d'une génératrice du tuyau, la bande est enroulée, avec ses bords latéraux perpendiculaires à l'axe du tuyau, sur un peu plus d'un tour, et le bord arrière 13 de la bande est collé le long d'une génératrice du tuyau au moyen d'un autre cordon d'adhésif 14.

Puis une deuxième bande 15 de la feuille 1 est mise en place de la même manière, en recouvrant sur une petite distance axiale d la première bande 11, et ainsi de suite.

Des essais effectués sur des tuyaux revêtus à la manière illustrée sur la Figure 2, à partir d'une feuille 1 telle que décrite plus haut, ont démontré les propriétés mécaniques satisfaisantes des revêtements de protection vis-à-vis du râclage sur une arête vive ou arrondie, du râclage sur le sol, du remblayage (essai ASTM G 13-85) et de la résistance aux chocs (essai ASTM G 14).

## Revendications

1. Feuille de protection en matière plastique pour élément de canalisation, comprenant:
- un film extérieur (2) en polyéthylène haute densité;
- un film intermédiaire (4) en polyéthylène tissé ou en polypropylène tissé; et
- un film intérieur (6) en polyéthylène haute densité;
- les films extérieur et intérieur étant collés sur le film intermédiaire.

2. Feuille de protection suivant la revendication 1, caractérisée en ce que le film intermédiaire (4) est en polyéthylène haute densité tissé.

3. Feuille de protection suivant la revendication 1 ou 2, caractérisée en ce que les films extérieur (2) et intérieur (6) sont collés sur le film intermédiaire (4) au moyen d'un film d'adhésif, notamment en polyéthylène basse densité.

4. Feuille de protection suivant la revendication 3, caractérisée en ce que le film d'adhésif reliant le film extérieur (2) au film intermédiaire (4) est moins épais que l'autre film d'adhésif (5).

5. Feuille de protection suivant la revendication 3 ou 4, caractérisée en ce que chaque film d'adhésif (3, 5) a une épaisseur comprise entre 5 et 20 µm.

6. Feuille de protection suivant l'une quelconque des revendications 1 à 5, caractérisée en ce que le film extérieur (2) est plus épais que le film intérieur (6).

7. Feuille de protection suivant l'une quelconque des revendications 1 à 6, caractérisée en ce que les films extérieur (2) et intérieur (6) ont une épaisseur comprise entre 50 et 200 µm.

8. Feuille de protection suivant l'une quelconque des revendications 1 à 7, caractérisée en ce que le film intermédiaire (4) a une épaisseur comprise entre 50 et 150 µm.

9. Feuille de protection suivant la revendication 1, caractérisée en ce que le film extérieur (2) est en polyéthylène haute densité d'environ 125 µm d'épaisseur, le film intermédiaire est en polyéthylène haute densité tissé d'environ 100 µm d'épaisseur, le film intérieur (6) est en polyéthylène haute densité d'environ 75 µm d'épaisseur, le film extérieur (2) est collé sur le film intermédiaire (4) par un film d'adhésif utilisé dans une quantité d'environ 15 g/m, et le film intérieur est collé au film intermédiaire par un film d'adhésif utilisé dans une quantité d'environ 20 g/m.

10. Elément de canalisation (7) portant sur au moins une partie de sa longueur un revêtement extérieur de protection constitué à partir d'une feuille de protection (1) suivant l'une quelconque des revendications 1 à 9.

11. Elément de canalisation suivant la revendication 10, caractérisé en ce que le revêtement est réalisé par enroulement successif de bandes (11, 15) dont les bords sont perpendiculaires à l'axe de l'élément de canalisation (7), avec une zone de recouvrement d'une bande à la suivante.

12. Elément de canalisation suivant la revendication 11, caractérisé en ce que chaque bande (11, 15) est mise en place par collage de son bord avant (10) sur une génératrice de l'élément de canalisation (7), enroulement sur un peu plus d'un tour et collage de son bord arrière (13) sur une génératrice de l'élément de canalisation.

## Patentansprüche

1. Schutzfolie aus Kunststoff für ein Rohrelement, bestehend aus:
- einem Außenfilm (2) aus Polyethylen hoher Dichte;
- einem Zwischenfilm (4) aus gewebtem Polyethylen oder gewebtem Polypropylen; und
- einem Innenfilm (6) aus Polyethylen hoher Dichte;
- wobei der Außenfilm und der Innenfilm auf den Zwischenfilm geklebt sind.

2. Schutzfolie nach Anspruch 1, dadurch gekennzeichnet, daß der Zwischenfilm (4) aus gewebtem Polyethylen hoher Dichte besteht.

3. Schutzfolie nach Anspruch 1 oder 2, dadurch gekennzeichnet, daß der Außenfilm (2) und der Innenfilm (6) mittels eines Klebefilms, insbesondere aus Polyethylen niedriger Dichte, auf den Zwischenfilm (4) geklebt sind.

4. Schutzfolie nach Anspruch 3, dadurch gekennzeichnet, daß der Klebefilm, der den Außenfilm (2) mit dem Zwischenfilm (4) verbindet, dünner als der andere Klebefilm (5) ist.

5. Schutzfolie nach Anspruch 3 oder 4, dadurch gekennzeichnet, daß beide Klebefilme (3, 5) zwischen 5 und 20 µm dick sind.

6. Schutzfolie nach einem der vorstehenden Ansprüche 1 bis 5, dadurch gekennzeichnet, daß der Außenfilm (2) dicker als der Innenfilm (6) ist.

7. Schutzfolie nach einem der vorstehenden Ansprüche 1 bis 6, dadurch gekennzeichnet, daß der Außenfilm (2) und der Innenfilm (6) zwischen 50 und 200 µm dick sind.

8. Schutzfolie nach einem der vorstehenden Ansprüche 1 bis 7, dadurch gekennzeichnet, daß der Zwischenfilm (4) zwischen 50 und 150 µm dick ist.

9. Schutzfolie nach Anspruch 1, dadurch gekennzeichnet, daß der Außenfilm (2) aus Polyethylen hoher Dichte von ca. 125 µm Dicke, der Zwischenfilm aus gewebtem Polyethylen hoher Dichte von ca. 100 µm Dicke und der Innenfilm (6) aus Polyethylen hoher Dichte von ca. 75 µm Dicke besteht, wobei der Außenfilm (2) mittels eines in der Menge von ca. 15 g/m verwendeten Klebefilms auf den Zwischenfilm (4) und der Innenfilm mittels eines in der Menge von ca. 20 g/m verwendeten Klebefilms auf den Zwischenfilm geklebt ist.

10. Rohrelement (7) daß über zumindest einen Teil seiner Länge mit einer äußeren Schutzauskleidung versehen ist, die aus einer Schutzfolie (1) nach einem der Ansprüche 1 bis 9 besteht.

11. Rohrelement nach Anspruch 10, dadurch gekennzeichnet, daß die Auskleidung aus sukzessiven Umwicklungen von Streifen (11, 15) besteht, deren Ränder senkrecht zur Richtung des Rohrelements (7) verlaufen, mit einer Überlappungszone zwischen aufeinanderfolgenden Streifen.

12. Rohrelement nach dem Anspruch 11, dadurch gekennzeichnet, daß jeder Streifen (11, 15) durch Aufkleben seiner Vorderkante (10) auf eine Erzeugende des Rohrelements (7), Umwicklung über etwas mehr als einen Umfang und Aufkleben seiner Hinterkante (13) auf eine Erzeugende des Rohrelements angebracht ist

## Claims

1. Plastic protective sheet for a pipe element, comprising:
- an outer high-density polyethylene film (2);
- an intermediate woven polyethylene or woven polypropylene film (4); and
- an inner high-density polyethylene film (6);
- the outer and inner films being bonded to the intermediate film.

2. Protective sheet according to Claim 1, characterized in that the intermediate film (4) is made of woven high-density polyethylene.

3. Protective sheet according to Claim 1 or 2, characterized in that the outer film (2) and inner film (6) are bonded to the intermediate film (4) by means of an adhesive film, especially one made of low-density polyethylene.

4. Protective sheet according to Claim 3, characterized in that the adhesive film joining the outer film (2) to the intermediate film (4) is thinner than the other adhesive film (5).

5. Protective sheet according to Claim 3 or 4, characterized in that each adhesive film (3, 5) has a thickness of between 5 and 20 µm.

6. Protective sheet according to any one of Claims 1 to 5, characterized in that the outer film (2) is thicker than the inner film (6).

7. Protective sheet according to any one of Claims 1 to 6, characterized in that the outer film (2) and inner film (6) have a thickness of between 50 and 200 µm.

8. Protective sheet according to any one of Claims 1 to 7, characterized in that the intermediate film (4) has a thickness of between 50 and 150 µm.

9. Protective sheet according to Claim 1, characterized in that the outer film (2) is made of high-density polyethylene approximately 125 µm in thickness, the intermediate film is made of woven high-density polyethylene approximately 100 µm in thickness, the inner film (6) is made of high-density polyethylene approximately 75 µm in thickness, the outer film (2) is bonded to the intermediate film (4) by an adhesive film, the amount used being approximately 15 g/m, and the inner film is bonded to the intermediate film by an adhesive film, the amount used being approximately 20 g/m.

10. Pipe element (7) bearing, over at least part of its length, an outer protective covering made up from a protective sheet (1) according to any one of Claims 1 to 9.

11. Pipe element according to Claim 10, characterized in that the covering is produced by successive winding of strips (11, 15) whose edges are perpendicular to the axis of the pipe element (7), with a region of overlap between one strip and the next.

12. Pipe element according to Claim 11, characterized in that each strip (11, 15) is put into place by bonding its leading edge (10) along a generatrix of the pipe element (7), winding over slightly more than one turn and bonding its trailing edge (13) along a generatrix of the pipe element.
